# EUROPEAN PATENT SPECIFICATION

(11) **EP 2 027 405 B1**
(45) Date of publication and mention of the grant of the patent: **25.07.2012**
(21) Application number: 07747995.4
(22) Date of filing: 10.04.2007
(51) Int. Cl.: F16K 1/02, F16K 37/00, F24D 19/10

(54) **REGULATING VALVE WITH A MAINTAINED REGULATING CHARACTERISTIC AT DIFFERENT KV-VALUES WITHIN ONE AND THE SAME VALVE**
REGELVENTIL MIT AUFRECHTERHALTENER REGELKENNGRÖSSE BEI VERSCHIEDENEN KV-WERTEN IN EIN UND DEMSELBEN VENTIL
VANNE DE REGULATION AVEC CARACTERISTIQUE DE REGULATION MAINTENUE A DIFFERENTES VALEURS DE KV DANS UNE MEME VANNE

(30) Priority: 12.06.2006 SE 0601278
(43) Date of publication of application: 25.02.2009
(73) Proprietor: TA Hydronics AB, 524 80 Ljung (SE)
(72) Inventor: TRANTHAM, John, M., Hurst, TX 76053 (US)
(74) Representative: Pitkänen, Hannu Alpo Antero
(86) International application number: PCT/SE2007/000329
(87) International publication number: WO 2007/145559

(56) References cited:
- EP-A2- 1 391 646
- WO-A1-03/044402
- DE-A1- 10 064 620
- DE-A1- 10 305 394
- SE-B- 465 636
- US-A- 3 658 291

## Description

The present invention relates to a device, designed to regulate the flow amount in a heating and cooling system according to the preamble of claim 1.

One example of a design of a device according to the present invention is to regulate the flow through the valve in such a way, that in an actual operational case a flow is obtained and an effect, which originates from the system and results in, that, when the regulating valve and its cone is lifted upwards to 50 % of its total lifting height, also the effect will be 50 % of the maximal effect. This correlation will be valid for all the flows through the regulating valve and with such a correlation between the lifting height and the effect the characteristic of the regulating valve is called logarithmic. The English term for this characteristic is EQ = equal percentage.

This characteristic can also be developed with a certain modification and is in these cases called an EQM-function = equal percentage modified. In the device according to the present invention the regulating valve has this function and also the invention is novel, because the characteristic can be maintained, when the maximal flow is changed, the flow, which artisans within the heating, water and sanitation field calls the Kv-value of the regulating valve.

Thus, the invention is very advantageous: For one and the same regulating valve the same dimension, said Kv-value can be changed with a maintained characteristic. One often used characteristic is the above-mentioned EQ-function, but the invention can of course also be developed for linear or alternative characteristics.

The already known devices for this purpose are impaired by various drawbacks.
In DE10064620A a solution with a preset function of the Kv-value is presented, but the invention cannot maintain the same characteristics for all Kv-values and especially not the EQM-function. There are regulating valves with e.g. an EQM-function, but in these cases the limitation is caused by the fact, that this function is valid for a fixed chosen Kv-value.
Also, there are valves with a variable Kv-value, but then this variation is connected to the fact, that limitations have been introduced into the regulating function of the valve by connecting the Kv-value to the lifting height of the valve. This means, that in these cases usually the length of the stroke is limited, i.e. the maximal opening degree of the valve will simply be limited and this results in, that the valve obtains an inferior capability to regulate the flow, only a small portion of the total length of the stroke remaining to be used for regulating work. The constructions used today has the principal drawback, that the regulating valve is made for a pre-selected Kv-value, This means, that various valves for different flow amounts are made. These are standardized size ratios between these flow amounts and this implies, that a manufacturer must manufacture and market different valves, which within each dimension include several Kv-values and this is required in order to meet various needs regarding the requirement as to the flow amounts.

This leads in its turn to the fact, that all other professionals, e.g. consultants, wholesale dealers and installation engineers must handle a large amount of valves and this is done in order to be able to supply an adequate regulating function for the separate operational case. Also, in a later situation requirements regarding service and maintenance will involve, that also these functions/professionals must store and handle a large valve assortment.

The object of the present invention is to be able to counteract and as far as possible avoid the above-mentioned problems. Also, the present invention is supposed to develop further the state of the art in this technical field in various respects. These objects are realized according to the present invention by means of a device of the type described in the introductory portion of the present specification, which device mainly is characterized by what is set forth in the characterizing clause of claim 1.

Additional characterizing features and advantages of the present invention are set forth in the following description, reference being made to the enclosed drawings, which show a preferred but not limiting embodiment of the invention.

In the present description the device according to the present invention has been mounted in a construction, which is just one example of an application of the invention. The primary part of the invention is the particularly designed cone, which cooperates with a seat and a veil. A veil, a generic term, which is generally used in e.g. the heating, water and sanitation technology field, as regards restriction and control of flows, is a form of screen wall, which, according to the present invention, is designed in the way set forth in the present description and the enclosed drawings. Thus, these parts, i.e. the seat, the cone and the veil, can be mounted in other embodiments of valve houses to obtain complete valves.

In the now shown and described embodiment of a regulating valve it is shown in detail in:
Fig. 1 an example of the design of a complete valve according to the invention;
Figs. 2A, 2B and 2C external pictures of a complete top piece;
Fig. 3 graphs, which show the function of the valve; and
Fig. 4A and 4B external and sectional views of the cone.

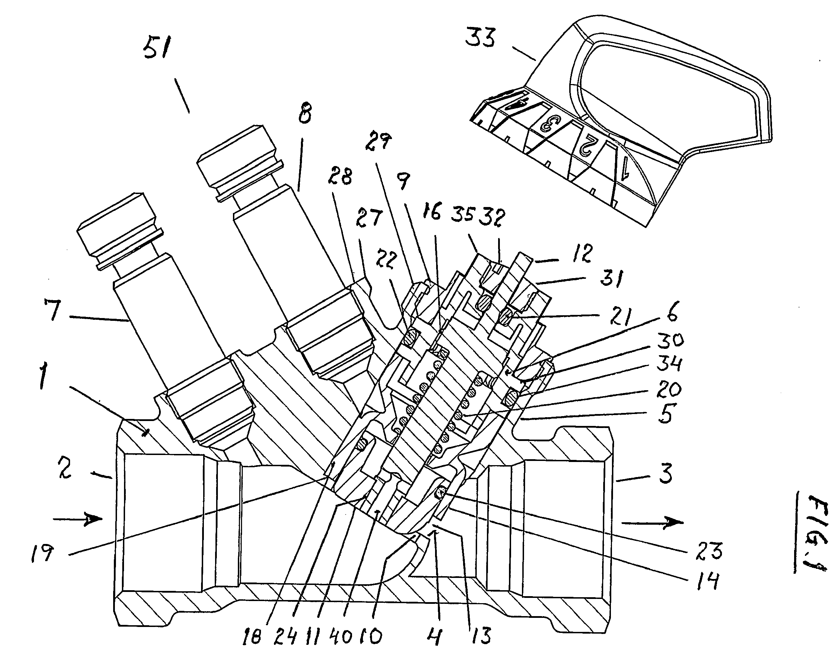

Fig. 1 shows just one example of how a valve according to the present invention may look like. There may of course be embodiments, which are different and in which the regulating portion, the important components: a valve seat 4, a complete top piece 6 with a cone 11 and a veil 14, e.g. may be combined with a differential pressure function and joined with the regulating portion into one unit. The present invention is characterized by the elements and the construction details, which jointly bring about the regulating function and the fact, that they then can be combined with other functions, e.g. a differential pressure control, or with cut-off functions, are solutions, which are evident to artisans within this technical field.

Thus, Fig. 1 shows a complete valve 51 in a sectional view with a valve body 1 with a feed connection 2, preferably with an internal threading, and with a return side with a corresponding threaded return connection 3. There is also on valve body 1 a connection joint 5 for a complete top piece 6. Top piece 6 is inserted into connection joint 5 and is fastened by a locking nut 9.

In order to measure pressure and temperature various connections are used, with mounted measuring nipples. For the high pressure level of the feeding side a measuring nipple 7 is used and for the low pressure level of the return side a measuring nipple 8 is used. Measuring nipples 7 and 8 respectively are standardized components, which are provided by the manufacturer, and their function and construction are described in previous patent documents, e.g. SE 465 636.

During the installation work complete valve 51 is connected to a tube system via connections 2 and 3 and additionally top piece 6 is supplemented with some type of an adjusting device - not shown in Fig. 1 - which controls the axial movement of a spindle 12 and then also a cone 11 and its height position in relation to valve seat 4 and a flow opening 10 in valve body 1. When the cone is moved upwards from valve seat 4, flow opening 10 is opened up from the feed side of the valve to its return side. In Fig. 1 cone 11 has been moved upwards from its closed position. In its closed position the cone seals against valve seat 4 with a sealing edge 13, which runs around the entire cone. The cone can also be rotated around its longitudinal axis and consequently occupy various positions in relation to a veil 14, with which the cone cooperates. The rotation of the cone is done by a wheel 33 on a pre-adjustment tool, which is mounted on the top piece 6, when this rotation or adjustment of the cone is to be done. The wheel will be described in detail below. The cone is rotated via a housing 15. In housing 15 spindle 12 is mounted and rotationally fixed by means of cooperating splines 16 - or equivalent rotational locking means. These splines will preferably be positioned on the periphery of spindle 12 and will cooperate there with splines, disposed on the inner diameter of the housing. However, spindle 12 can be moved in an axial direction in relation to housing 15. Veil 14 will be rotationally mounted in a definite position in connection joint 5. However, housing 15 can be rotated in relation to the veil, but the housing can only be mounted in a position in relation to connection joint 5 and this means, that also spindle 12 and cone 11 will have a known position in relation to connection joint 5.

Through the mutual interconnected positions between spindle 12, cone 11, housing 15 and veil 14 conditions have been obtained, making it possible to always know, where the cone is located rotationally in relation to the veil. This is one of the conditions allowing the valve to be delivered and installed with a known adjustment position or rotational position of the cone in relation to an opening 25 in veil 14.

Purely visually seen the actual rotational position can be shown in various ways. Thus, a wheel 33 e.g. can be mounted on an upper part 35 of housing 15.
The wheel or pre-adjusting tool 33 preferably will be provided with a connection portion at its bottom, which cooperates with an upper portion 36 of housing 15, the upper portion preferably being provided with splines or a similar alternative design of the upper portion 36 of the housing. On a portion of the periphery of upper portion 36 there is a beveled plane 42. Wheel 33 preferably is provided with a corresponding design, which means, that the wheel is rotationally controlled in relation to housing 15.

The wheel preferably is provided with some type of numerical indications on its outer periphery and since the rotational position of the wheel is fixed/known in relation to housing 15, it is also fixed/known in relation to the cone.

A rotation of the wheel consequently results in, that the position of the cone is changed in relation to the veil. Wheel 33 with its numerical indications can be adjusted towards some type of index position on the valve body. Thus, the index position may e.g. be an edge 27 or a tongue at an upper connection plane 28 on measuring nipple 8. Edge or tongue 27 consequently is given a definite mounting position in relation to the complete top piece 6. Wheel 33 is just a pre-adjusting tool.

In order to in an operational position, subsequent to the installation, be able to handle the cone in the axial direction the complete valve must be provided with some type of adjusting device, which will control the movement of the cone. This adjusting device is not described in detail in the present text. A number of adjustment devices are available, which can be mounted on a valve according to the present invention.

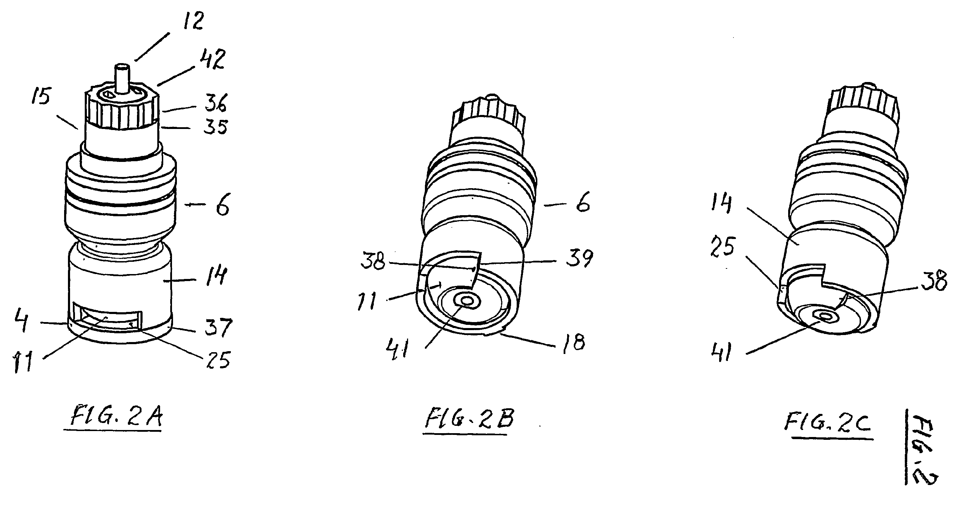

The complete top piece is constructed in the following manner:
On spindle 12 cone 11 is mounted in a definite rotational position. The position of the cone is dependent on the fact, that the spindle has a beveled plane 24 - see Fig. 2B - or an equivalent to it, which cooperates with the corresponding plane of the cone. Spindle 12 is in its turn fitted into housing 15 via splines 16. Also, there is a beveled area or in an equivalent way a special-type area on the periphery of the spindle, where splines 16 are beveled and where this portion cooperates with a corresponding portion of the housing. Consequently, spindle 12 can only be mounted in just one position in relation to housing 15. This means, that also the positions of cone 11 and housing 15 are mutually definitive. Veil 14 will also be rotationally fixed, when complete top piece 6 will be mounted in connection joint 5, because the veil is provided with a projecting portion 18 - see Fig. 2B - , which fits into a corresponding groove 17 in connection joint 5. Thus, the veil is fixedly mounted in the connection joint. The veil has a lower portion 19, which abuts, also pressed by the spring force from a spring 20, against valve seat 4. Thus, the veil cannot rotate nor be moved in an axial direction in relation to connection joint 5.

In certain applications the valve according to the present invention can be combined with adjustment devices having a controlled to and fro-movement and in such a case no spring 20 is required, but in such a case some type of spring element can be placed between housing 15 and veil 14 in order to guarantee the position of the veil in relation to valve seat 4.

The working procedure during the mounting of the complete top piece preferably is done in the following way:
Firstly spindle 12 is mounted in housing 15. An O-ring 21 and an O-ring 22 respectively is then mounted. An O-ring 23 is mounted on the cone. Spring 20 is positioned between housing 15 and veil 14 and the spring is compressed in order to allow cone 11 to be mounted. The cone is mounted - is compressed or the like - on spindle 12.

The top piece is pushed downwards into connection joint 5 and the fastening is done in an axial direction with a locking nut 9, which is threaded onto a neck 29 on connection joint 5. Locking nut 9 compresses a plane 30 on housing 15, which in its turn compresses lower portion 19 of the veil downwards towards valve seat 4, which constitutes a stop for top piece 6.

The function of spring 20 it to push the spindle into its upper position, i.e. to always open up the cone so far, as a possible adjustment device allows it to be opened up.

To be able to seal the spindle against a possible outer leakage an O-ring 21 is used, which is fastened by a stuffing box nut 31. Nut 31 is provided with a few, preferably 2, recesses 32, designed for a mounting of nut 31.

In order to prevent a leakage between top piece 6 and connection joint 5 an O-ring 22 is used, mounted in an O-ring groove 34 on housing 15.

In order to balance the static forces, which are created, when the valve is closed, cone 11 is decompressed. Through a hole 40 in spindle 12 the static pressure is lead from the lower side of the cone up to its upper side. In this way a balance is obtained between the forces, which actuate the cone from below and from above respectively and this can be done to avoid the appearance of necessary large adjustment forces, which would appear, in case the valve would be closed, when the cone is not decompressed.

Fig. 2A shows a principal external view of complete top piece 6.
The figure shows, that housing 15 has an upper part 35 with a spiked part 36. This spiked part has a beveled plane 42 and against this beveled plane 42 there is a corresponding beveled part in wheel 33. In this way the mounting position of wheel 33 in relation to housing 15 is unambiguous. The wheel preferably shows a number of numerals on its periphery and which, due to an adjusted rotational position, indicate a numerical value, which can be read in front of edge 27 at the connection plane for measuring nipple 8 and its upper connection plane 28. The numerical value indicates the rotation, which the cone has carried out in relation to a starting value. In Fig. 2A veil 14 with its opening 25 is shown. The opening is extended along the periphery of the veil and has a height, selected to be able, when it cooperates with cone 11 and its fashion, to change the flow from the feed side of the valve to its return side in the way, which is characteristic for a regulation valve with e.g. an EQ-function. In Fig. 2A a principal valve seat 4 is also shown having a ring section 37. This ring section has been indicated in order to simplify/improve the clarity. Of course, the valve seat is actually a portion of valve body 1, which is shown in Fig. 1.

In Fig. 2A cone 11 is shown in a position, in which the cone has been opened up in relation to the valve seat.

In Fig. 2B complete top piece 6 is shown in a view obliquely from below. In this figure the cone is in the position, which allows a maximal opening of the flow opening. The maximal opening is obtained, when cone 11 has rotated, so that a maximally machined flank 38 of the cone is positioned straight in front of an opening edge 39 on the veil, at the same time as the cone is in its highest opening position in an axial direction, i.e. at the highest position in relation to valve seat 4. Thus, this position of the cone in relation to the veil and the seat allows a maximal opening and consequently a maximal flow through the regulating valve. This maximal flow is called by artisans the Kv-value of the valve.

In order to know, that the valve has been adjusted for the maximal flow, i.e. to the Kv-value, which is obtained with the adjustment described above, the pre-adjustment tool or wheel 33 is used, by means of which housing 15 is rotated - and then also spindle 12 and cone 11 - to a certain numerical value - e.g. 10 - which corresponds to the maximal opening position and in which numeral 10 then will be positioned in front of edge 27 at connection plane 28 of measuring nipple 8.

Fig. 2C shows an alternative position of cone 11 in relation to veil 14:
In this operational case the cone has been rotated a number of degrees, which results in, that the veil in this position screens off that portion of the cone, which includes a maximally machined flank 38. The part of the cone, which in this case cooperates with opening 25 of the veil, has another fashion, which implies, that the opening, or the flow opening 10 between the cone, the seat and the veil will not be as large as in the case according to Fig. 2B.

In this case a new Kv-value for the valve is obtained and since the cone has been rotated - housing 15 has been rotated to the same extent - it is possible to, by means of the pre-adjustment tool or wheel 33, read a new, lower numerical value straight in front of edge 27 at the connection plane 28 of measuring nipple 8.

By an additional rotation of the housing/the cone it is on the other hand possible to obtain new Kv-values for the valve.

The entirely new feature of the present invention consists in, that, despite the different Kv-values of one and the same valve, the valve has in all these operational cases as an example a feature, which corresponds to an EQ-function.

The invention allows the unique situation, that it is possible, with one and the same valve, to select a number of Kv-values and then despite this flexibility obtain a regulating characteristic, which is the same regardless of the selected Kv-value. Also, a maximal regulating accuracy is obtained, since the valve always is able to perform with the entire lifting height of the cone/the valve.

The construction according to the present invention allows one and the same valve to be used, also in case the flow requirement - the Kv-requirement - varies from one installation to another installation. One example of an advantage is, that it is possible to select a valve dimension, which coincides with the dimension of the feed line and the return line. No transitional pieces between different dimensions are required, which may be the case with the constructions, which are used today. The size of the span, within which the valve is to perform, e.g. how many standardized Kv-values, which the valve will correspond to, can vary. The manufacturer will be able to determine this. Another factor, which controls this, is, that a large number of Kv-values results in a limitation of the width of opening 25 of the veil, since the cone of course cannot be rotated more than 360° minus the width of opening 25.

Of course, since the value includes a number of Kv-values, the manufacturing and then also the storage for various users will be simpler and more cost efficient. Another great advantage of the present invention is, that it is possible to change the Kv-value subsequent to the installation of the valve, since the actual operating situation perhaps does not entirely agree with the calculated one. Since the valve can be pre-adjusted in a stepless way, the Kv-value can of course be selected completely freely and not necessarily be connected to standard values.

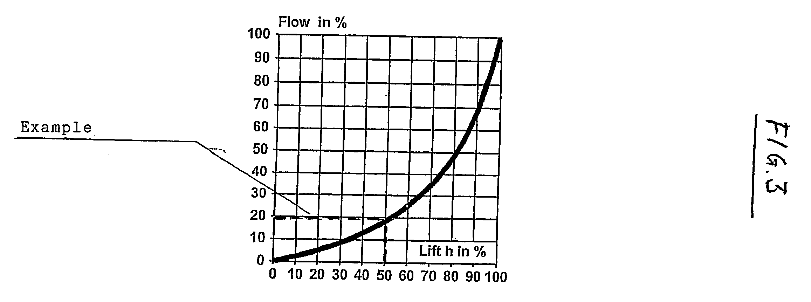

Fig. 3 shows one example of a functional relationship between the flow and the lifting height of the valve cone for the present invention. The graph is obtained for a constant differential pressure across the valve. If it is assumed, that the apparatus, which emits heat and for which the valve regulates the flow, emits 50 % of the prescribed effect, when the flow is 20 % of the prescribed flow, the valve will in this case produce a 20 % flow, when it is open to 50 %, which means, that, when the valve is open to 50 %, the efficiency also will be 50 %. When this relationship is valid for all the flows, the valve has a logarithmic function or a modified logarithmic characteristic - an EQM-function.

The present invention has, thanks to the design of the cone, the unique property, that this connection between lift height, flow and effect is maintained, also if the flow for a 100 % lift height is different, i.e. for different Kv-values for one and the same valve dimension.

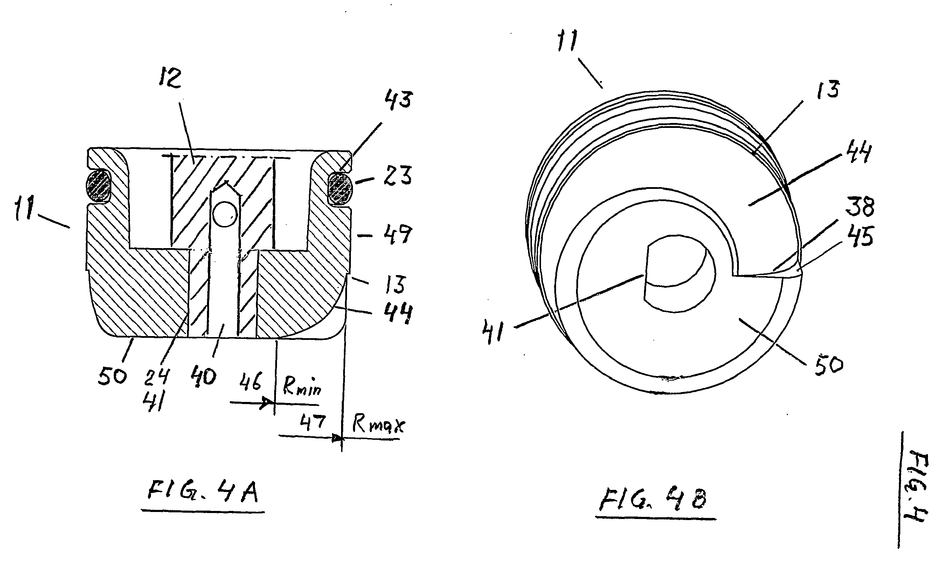

The design of the cone is shown in Fig. 4:
The cone preferably is made by a casting and preferably of a plastic material, which can withstand the used temperature levels, which normally are below about 150°C, and the wear, which is caused by the flowing medium.

In Fig. 4A a sectional view of cone 11 is shown, spindle 12 with its hole 40 also being shown. The cone is mounted on the spindle via a press fit or by another permanent mounting method. Sealing edge 13 constitutes the surface, which abuts valve seat 4, when the cone is closed. In order to seal and guide the cone against veil 14, O-ring 23 is mounted in an O-ring groove 43.

In Fig. 4B it is shown, that the cone has a beveled groove 41, which cooperates with the corresponding plane of spindle 12, and this will allow the spindle and the cone to be rotationally locked to each other in a certain position. In Figs. 4A and 4B it is shown schematically, how a flank 44 on the cone is changed along the periphery of the cone. In the example with a cone for a valve having a logarithmic function the flank of the cone is machined into an envolute, the shape of which is continuously growing from a minimal radius 46 - Rₘᵢₙ - outwards to a maximal radius 47 - Rₘₐₓ - 360° later and where Rmax is the same as the radius of the cone directly below a sealing edge 13. The transition between the two radii 46 and 47 is done at a perpendicular edge 45.

The profile of the cone vertically is also profiled, the profile starting at edge 45 with Rₘᵢₙ 46 at its lower edge, at a bottom 50, and being connected at the very top to Rₘₐₓ 47. At edge 45 and its lower inner edge the flank has its maximal bending or a maximal machining 38.

Thus, at an imaginary cut, rotated 180° in relation to edge 45 the profile starts with bottom 50 with radius (Rₘᵢₙ + Rₘₐₓ) /2 and will at the top also in this case be connected to Rₘₐₓ As is shown in Fig. 2B edge 45 coincides with opening edge 39 of the veil in the case, where the maximal Kv-value = the Kv-value is desirable/adjusted for the valve variant. When cone 11 is rotated into this position, the largest radial play between cone 11 and veil 14 is obtained. Vertically flank 44 has the same size all around the periphery and also the upper portion of the flank has the same diameter all around, and flank 44 meets there sealing edge 13, which in its turn extends in a perpendicular direction towards flank 44 and outwards towards outer diameter 49 of the cone. Thus, because flank 44 has a continuously increasing base radius, namely the radius at bottom 50 of the cone, from Rₘᵢₙ 46 to Rₘₐₓ 47, the gap, which is formed between flank 44 and an internal radius 48 of the veil will decrease continuously, when the cone is rotated into a new position. This gap and its continuous change give the valve construction its unique capacity to change flow opening 10, the desirable flow through the valve always corresponding to the desirable amount in relation to the opening degree of the valve. Since the cone also is moved in an axial direction, when the valve is opened up, also due to this axial movement, the gap between the cone and the inner diameter of the veil will successively increase, since the opening 25 of the veil will be positioned further downwards towards bottom 50 of the cone and consequently further downwards and further away from flank 44, and as a consequence of this the space or the open surface between flank 44 and opening 25 of the veil will increase with an increased axial movement of the cone upwards from valve seat 4. Described in mathematical terms: The surface between flank 44 and opening 25 of the veil is : A = f(x) f(y), where x is a function of the rotation of the cone and y is a function of the axial movement.

### COMPONENT LIST:

| | | | |
|---|---|---|---|
| 1 = | valve body | 2 = | feed connection |
| 3 = | return connection | 4 = | valve seat |
| 5 = | connection joint | 6 = | complete top piece |
| 7 = | measuring nipple | 8 = | measuring nipple |
| 9 = | locking nut | 10 = | flow opening |
| 11 = | cone | 12 = | spindle |
| 13 = | sealing edge | 14 = | veil |
| 15 = | housing | 16 = | splines |
| 17 = | groove | 18 = | projecting portion |
| 19 = | lower portion | 20 = | spring |
| 21 = | O-ring | 22 = | O-ring |
| 23 = | O-ring | 24 = | bevelled plane |
| 25 = | opening of the veil | 26 = | upper side |
| 27 = | edge | 28 = | upper connection plane |
| 29 = | neck | 30 = | plane |
| 31 = | stuffing box nut | 32 = | recess |
| 33 = | pre-adjustment tool/wheel | 34 = | O-ring groove |
| 35 = | upper part | 36 = | spiked part |
| 37 = | ring section | 38 = | maximally machined flank |
| 39 = | opening edge | 40 = | hole |
| 41 = | groove | 42= | bevelled plane |
| 43 = | O-ring groove | 44 = | flank |
| 45 = | edge | 46 = | Rₘᵢₙ |
| 47 = | Rₘₐₓ | 48 = | internal radius |
| 49 = | outer diameter | 50 = | bottom |
| 51 = | complete valve | | |

## Claims

1. A device, designed to regulate the flow of a medium in a heating or cooling system, which device comprises a complete regulating valve (51), with a valve body (1), includes a feed connection (2) and a return connection (3) and a valve seat (4), the complete regulating valve also including a measuring nipple (7) and (8) respectively for measuring pressure or temperature levels, as well as a connection joint (5) with the valve seat (4) and with a mounted complete top piece (6), which comprises a cone (11), which is mounted on a spindle (12), the spindle being rotationally fastened and mounted in a housing (15) but movable in the axial direction in the housing with an adjustment device, which can be mounted on an upper part (36) of the housing (15), for the utilization of the valve, **characterized in that** the housing is designed to cooperate with a pre-adjustment tool or a wheel (33), with which the housing (15) and then also the cone (11) can be rotated to required positions in relation to a veil (14), which has been fixedly mounted in the connection joint (5) and which has an opening (25), which the cone (11) will be cooperating with, the size of the opening changing dependent on the height and the rotational position of the cone in relation to the veil (14), wherein a maximal flow through the complete valve (51) is reduced in a stepless way, with a maintained flow characteristic, regardless of the chosen maximal flow , due to the fact, that the cone (11) is rotatable in relation to the opening (25) in the veil (14) to pre-adjust the chosen maximal flow and also displaceable in an axial direction with an increasing opening grade in relation to the opening (25), when the cone, mounted on the spindle, is successively lifted by means of the adjustment device.

2. A device according to claim 1, **characterized in that** the complete valve (51) regulates the flow according to a logarithmic function or a modified logarithmic characteristic - an EQM-function - alternatively according to a linear or equivalent function, also when the chosen maximal flow is changing, the cone (11) having a machined flank (44), the design of which is continuously growing in a bottom plane (50) from a minimal radius Rₘᵢₙ (46) outwards to a maximal radius Rₘₐₓ (47), and **in that** the cone also vertically is profiled and increases from Rₘᵢₙ (46) at the bottom (50) and outwards to Rₘₐₓ (47) at the top along a sealing edge (13).

3. A device according to claim 1, **characterized in that** the regulating function is determined by the cone (11), which is mounted in a fixed position in relation to the spindle (12), which in its turn is rotationally fastened in the housing (15), which in its turn is rotationally mounted in the complete top piece (6), which is fastened in the connection joint (5) and in relation to an index, an edge (27) on a connection plane (28) for the measuring nipple (8), in this way the rotational mounting position of the cone (11) being known in relation to the edge (27).

4. A device according to claim 3, **characterized in that** the cone (11) is rotated with the housing (15), the housing having an upper part (35), in which a pre-adjustment tool or a wheel (33) is unambiguously rotationally fixed and in which the wheel (33) preferably is provided with a number of numerals on its periphery and, dependent on the adjusted rotational position, indicates a numerical value, which is read in front of the edge (27), the numerical value being dependent on the rotation, which the cone has done in relation to the known starting position/mounting position.

5. A device according to claim 1, **characterized in that** the complete top piece (6) is the veil (14), fixedly mounted in a definitive rotational position in relation to the connection joint (5), in this way an opening (25) in the periphery of the veil being determined as to its position in relation to the cone (11).

6. A device according to claim 1, **characterized in that** the cone (14) with its machined flank (44), the height of which has the same size along the periphery of the entire cone and which extends from a bottom (50) on the cone and upwards towards a sealing edge (13), extends perpendicularly outwards from the flank (44) a n d **in that** the flank (44) has a minimal radius Rₘᵢₙ (46) at the bottom (50) and a maximal radius Rₘₐₓ (47), where the sealing edge (13) is connected to the periphery of the cone.

7. A device according to claim 6, **characterized in that** the transition between the two radii Rₘᵢₙ (46) and Rₘₐₓ (47) is done at an edge (45), perpendicular to the periphery of the cone at the flank (44) and that thus the transition from the minimal radius to the maximal radius is done, when the flank (44) has been rotated 360°.

8. A device according to claims 1 and 6, **characterized in that** the flank (44) vertically has a profile, which at the edge (45) in its lower part starts with the radius Rₘᵢₙ (46) and at the top is connected to Rₘₐₓ **and in that** this flank profile successively reduces its bent shape in order to in a position 360° later constitute a straight flank/line between the bottom (50) and upwards towards the sealing edge (13).

9. A device according to claim 8, **characterized in that** the gap, which is formed between the flank (44) and the internal radius (48) of the veil is reduced or increases continuously, when the cone is rotated in relation to the veil and its opening (25), **and in that** this gap also changes during the radial movement of the cone **and in that** these changed positions of the cone (11) in relation to the veil (14) and its opening (25) result in a continuous change in the flow opening (10), the desirable flow through the complete valve (51) always corresponding to a desirable amount of flow in relation to the opening degree - the lifting height and the rotational position.

10. A device according to claim 1, **characterized in that** the complete valve (51), as regards the flow, when the cone (11) is rotated, is pre-adjusted in a stepless way to optional Kv-values.

## Patentansprüche

1. Vorrichtung, die dazu ausgelegt ist, die Strömung eines Mediums in einem Wärme- oder Kühlungssystem zu regeln, wobei die Vorrichtung ein komplettes Regulierventil (51) mit einem Ventilkörper (1) aufweist, das eine Zuführverbindung (2) und eine Ruckführverbindung (3) und einen Ventilsitz (4) aufweist, wobei das komplette Regulierventil des Weiteren einen Messstutzen (7) beziehungsweise (8) zum Messen eines Druck- oder Temperaturniveaus, sowie einen Verbindungsanschluss (5) mit dem Ventilsitz (4) und mit einem befestigten kompletten Oberteil (6), das einen Konus (11) aufweist, der auf einer Spindel (12) montiert ist, wobei die Spindel rotierbar befestigt und montiert in einem Gehäuse (15) ist, aber bewegbar in der axialen Richtung in dem Gehäuse mit einer Einstellvorrichtung ist, die auf einem oberen Teil (36) des Gehäuses (15) zum Verwenden des Ventils montiert werden kann, **dadurch gekennzeichnet, dass** das Gehäuse dazu ausgelegt ist, mit einem Voreinstellungswerkzeug oder einem Rad (33) zusammenzuwirken, mit dem das Gehäuse (15) und dann ebenfalls der Konus (11) in benötigte Positionen im Verhältnis zu einem Deckelement (14) rotiert werden kann, das fest in dem Verbindungsanschluss (5) montiert ist und das eine Öffnung (25) aufweist, mit der der Konus (11) zusammenwirken wird, wobei die Größe der Öffnung abhängig von der Höhe und der Rotationsposition des Konus sich in Bezug auf das Deckelement (14) ändert, wobei ein Maximalstrom durch das komplette Ventil (51) auf stufenlose Weise reduziert wird, und zwar mit einer aufrechterhaltenen Strömungscharakteristik unabhängig von dem gewählten Maximalstrom aufgrund der Tatsache, dass der Konus (11) rotierbar in Relation zu der Öffnung (25) in dem Deckelement (14) ist, um den gewählten Maximalstrom voreinzustellen, und ebenfalls in einer Axialrichtung mit einem sich vergrößernden Öffnungszustand in Rotation zu der Öffnung (25) versetzbar ist, wenn der Konus, montiert auf der Spindel, sukzessive mittels der Einstellvorrichtung angehoben wird.

2. Vorrichtung nach Anspruch 1, **dadurch gekennzeichnet, dass** das komplette Ventil (51) dem Strom gemäß einer logarithmischen Funktion oder einer modifizierten logarithmischen Charakteristik - einer EQM Funktion - alternativ gemäß einer linearen oder äquivalenten Funktion regelt, auch wenn der gewählte Maximalstrom sich ändert, wobei der Konus (11) eine maschinierte Flanke (44) aufweist, deren Formgebung in einer Bodenebene (50) von einem minimalen Radius Rₘᵢₙ (46) nach außen zu einem maximalen Radius Rₘₐₓ (47) kontinuierlich anwächst, und dass der Konus ebenfalls vertikal profiliert ist und sich von Rₘᵢₙ (46) an dem Boden (50) und nach außen zu Rₘₐₓ (47) an der Oberseite entlang einer Dichtungskante (13) vergrößert.

3. Vorrichtung nach Anspruch 1, **dadurch gekennzeichnet, dass** die Regelfunktion durch den Konus (11) bestimmt ist, der in einer festen Position in Bezug auf die Spindel (12) montiert ist, die wiederum rotierbar in dem Gehäuse (15) befestigt ist, das wiederum rotierbar in dem kompletten Oberteil (6) montiert ist, das in dem Verbindungsanschluss (5) und in Bezug auf einen Index, einer Kante (27) an einer Verbindungsebene (28) für den Messstutzen (8), befestigt ist, wobei auf diese Weise die Rotationsbefestigungsposition des Konus (11) in Bezug auf die Kante (27) bekannt ist.

4. Vorrichtung nach Anspruch 3, **dadurch gekennzeichnet, dass** der Konus (11) mit dem Gehäuse (15) rotiert wird, wobei das Gehäuse ein Oberteil (35) aufweist, in dem ein Voreinstellungswerkszeug oder ein Rad (33) unzweideutig rotierbar befestigt ist und in dem das Rad (33) vorzugsweise mit einer Anzahl von Zahlen auf seinem Umfang bereitgestellt ist, und, abhängig von der eingestellten Rotationsposition, einen numerischen Wert anzeigt, der vor der Kante (27) gelesen wird, wobei der numerische Wert von der Rotation abhängt, die der Konus in Bezug auf die bekannte Startposition/Befestigungsposition ausgeführt hat.

5. Vorrichtung nach Anspruch 1, **dadurch gekennzeichnet, dass** das komplette Oberteil (6) das Deckelement (14) ist, das fest in einer definitiven Rotationsposition in Bezug auf den Verbindungsanschluss (5) befestigt ist, wobei auf diese Weise eine Öffnung (25) in dem Umfang des Deckelements in einer Position in Bezug auf den Konus (11) bestimmt ist.

6. Vorrichtung nach Anspruch 1, **dadurch gekennzeichnet, dass** der Konus (14) mit seiner maschinierten Flanke (44), deren Höhe dieselbe Größe entlang des Umfangs des gesamten Konus aufweist und die sich von einem Boden (50) an dem Konus und nach oben in Richtung einer Dichtungskante (13) erstreckt, sich senkrecht nach außen von der Flanke (44) erstreckt, und dass die Flanke (44) ein minimalen Radius Rₘᵢₙ (46) an dem Boden (50) und einen maximalen Radius Rₘₐₓ (47) aufweist, wobei die Dichtungskante (13) mit dem Umfang des Konus verbunden ist.

7. Vorrichtung nach Anspruch 6, **dadurch gekennzeichnet, dass** der Übergang zwischen den zwei Radien Rₘᵢₙ (46) und Rₘₐₓ (47) an einer Kante (45) vorgenommen ist, senkrecht zu dem Umfang des Konus an der Flanke (44), und dass dadurch der Übergang von dem minimalen Radius zu dem maximalen Radius hergestellt ist, wenn die Flanke (44) 360° rotiert worden ist.

8. Vorrichtung nach den Ansprüchen 1 und 6, **dadurch gekennzeichnet, dass** die Flanke (44) vertikal ein Profil aufweist, das an der Kante (45) in seinem unteren Teil mit dem Radius Rₘᵢₙ (46) beginnt und seiner Oberseite mit Rₘₐₓ verbunden ist, und dass dieses Flankenprofil sukzessive seine Biegeform reduziert, um in einer Position 360° später eine gerade Flanke/Linie zwischen dem Boden (50) und nach oben in Richtung der Dichtungskante (13) herzustellen.

9. Vorrichtung nach Anspruch 8, **dadurch gekennzeichnet, dass** die Lücke, die zwischen der Flanke (44) und dem inneren Radius (48) des Deckelements ausgebildet ist, kontinuierlich reduziert wird oder sich vergrößert, wenn der Konus in Bezug auf das Deckelement und seine Öffnung (25) rotiert wird, und dass diese Lücke sich auch während der radialen Bewegung des Konus ändert, und dass diese geänderten Positionen des Konus (11) in Bezug auf das Deckelement (14) und seine Öffnung (25) in einer kontinuierlichen Änderung in der Strömungsöffnung (10) resultieren, wobei die gewünschte Strömung durch das komplette Ventil (51) immer einer gewünschten Strömungsmenge in Bezug auf den Öffnungsgrad - die Hubhöhe und die Rotationsposition - entspricht.

10. Vorrichtung nach Anspruch 1, **dadurch gekennzeichnet, dass** das komplette Ventil (51), was die Strömung betrifft, wenn der Konus (11) rotiert wird, auf eine stufenlose Weise zu optionalen Kv- Werten voreingestellt wird.

## Revendications

1. Dispositif conçu pour assurer la régulation du débit d'un fluide dans un système de chauffage ou de refroidissement, lequel dispositif comprend un robinet de régulation (51) complet, incluant un corps de robinet (1), qui comporte une connexion d'alimentation (2) et une connexion de retour (3) et un siège de robinet (4), le robinet de régulation complet comportant également un élément fileté de mesure (7) et (8) respectivement destiné à mesurer des niveaux de pression ou de température, ainsi qu'un raccordement de connexion (5) avec le siège de robinet (4) et avec une pièce supérieure (6) complète montée, laquelle comprend un cône (11), qui est monté sur une tige (12), la tige étant immobilisée en rotation et montée dans un logement (15), mais étant mobile suivant la direction axiale dans le logement au moyen d'un dispositif d'ajustement, lequel peut être monté sur une partie supérieure (36) du logement (15) pour l'utilisation du robinet, **caractérisé en ce que** le logement est agencé de façon à coopérer avec un organe de pré-ajustement ou une roue (33), au moyen duquel le logement (15) et alors également le cône (11) peuvent être déplacés en rotation jusqu'à des positions requises vis-à-vis d'un capuchon (14), qui a été monté d'une manière fixe dans le raccordement de connexion (5) et qui présente une ouverture (25), avec laquelle le cône (11) coopérera, la taille de l'ouverture variant en fonction de la hauteur et de la position en rotation du cône vis-à-vis du capuchon (14), un débit maximal à travers le robinet (51) complet étant réduit d'une manière progressive, avec une caractéristique de débit maintenue, quel que soit le débit maximal choisi, du fait que le cône (11) est déplaçable en rotation vis-à-vis de l'ouverture (25) prévue dans le capuchon (14) de façon à pré-ajuster le débit maximal choisi et est également déplaçable suivant une direction axiale avec un degré d'ouverture croissant vis-à-vis de l'ouverture (25), lorsque le cône, monté sur la tige, est soulevé d'une manière progressive au moyen du dispositif d'ajustement.

2. Dispositif suivant la revendication 1, **caractérisé en ce que** le robinet (51) complet assure la régulation du débit conformément à une fonction logarithmique ou une caractéristique logarithmique modifiée - une fonction EQM - en variante conformément à une fonction linéaire ou équivalente, également lorsque le débit maximal choisi change, le cône (11) présentant un flanc (44) usiné, dont le profil croît d'une manière continue dans un plan de base (50) en allant vers l'extérieur à partir d'un rayon minimal Rₘᵢₙ (46) jusqu'à un rayon maximal Rₘₐₓ (47), et **en ce que** le cône est également profilé verticalement et croît à partir de Rₘᵢₙ (46) à l'endroit de la base (50) et vers l'extérieur jusqu'à Rₘₐₓ (47) au sommet le long d'une arête d'étanchéité (13).

3. Dispositif suivant la revendication 1, **caractérisé en ce que** la fonction de régulation est déterminée par le cône (11), lequel est monté dans une position fixe vis-à-vis de la tige (12), laquelle à son tour est immobilisée en rotation dans le logement (15), lequel à son tour est monté à rotation dans la pièce supérieure (6) complète, qui est fixée dans le raccordement de connexion (5) et vis-à-vis d'un index, un bec (27) situé sur un plan de connexion (28) prévu pour l'élément fileté de mesure (8), la position de montage en rotation du cône (11) étant de cette manière connue vis-à-vis du bec (27).

4. Dispositif suivant la revendication 3, **caractérisé en ce que** le cône (11) est déplacé en rotation avec le logement (15), le logement présentant une partie supérieure (35), dans laquelle un organe de pré-ajustement ou une roue (33) est fixé à rotation sans ambiguïté et dans laquelle la roue (33) est de préférence pourvue d'un certain nombre de chiffres à sa périphérie et, en fonction de la position de rotation ajustée, indique une valeur numérique, laquelle est lue en face du bec (27), la valeur numérique étant dépendante de la rotation que le cône a effectuée vis-à-vis de la position de départ/position de montage connue.

5. Dispositif suivant la revendication 1, **caractérisé en ce que** la pièce supérieure (6) complète est le capuchon (14), monté de manière fixe dans une position en rotation définitive vis-à-vis du raccordement de connexion (5), une ouverture (25) présentée à la périphérie du capuchon étant de cette manière déterminée en ce qui concerne sa position vis-à-vis du cône (11).

6. Dispositif suivant la revendication 1, **caractérisé en ce que** le cône (14) avec son flanc (44) usiné, dont la hauteur a la même dimension le long de la périphérie du cône entier et qui s'étend à partir d'une base (50) prévue sur le cône et vers le haut en direction d'une arête d'étanchéité (13), s'étend perpendiculairement vers l'extérieur à partir du flanc (44) et **en ce que** le flanc (44) présente un rayon minimal Rₘᵢₙ (46) à l'endroit de la base (50) et un rayon maximal Rₘₐₓ (47), à l'endroit où l'arête d'étanchéité (13) est raccordée à la périphérie du cône.

7. Dispositif suivant la revendication 6, **caractérisé en ce que** la transition entre les deux rayons Rₘᵢₙ (46) et Rₘₐₓ (47) est réalisée à l'endroit d'un épaulement (45), perpendiculaire à la périphérie du cône à l'endroit du flanc (44), et **en ce qu'**ainsi la transition à partir du rayon minimal jusqu'au rayon maximal est réalisée, lorsque le flanc (44) a été déplacé en rotation de 360°.

8. Dispositif suivant les revendications 1 et 6, **caractérisé en ce que** le flanc (44) présente verticalement un profil qui à l'endroit de l'épaulement (45) à sa partie inférieure débute avec le rayon Rₘᵢₙ (46) et au sommet est raccordé à Rₘₐₓ et **en ce que** ce profil de flanc réduit progressivement sa forme de courbure afin de constituer dans une position à 360° ultérieure un flanc/ligne droit entre la base (50) et, vers le haut, en direction de l'arête d'étanchéité (13).

9. Dispositif suivant la revendication 8, **caractérisé en ce que** l'intervalle qui est formé entre le flanc (44) et le rayon interne (48) du capuchon est réduit ou croît d'une manière continue, lorsque le cône est déplacé en rotation vis-à-vis du capuchon et son ouverture (25), et **en ce que** cet intervalle varie également pendant le mouvement radial du cône et **en ce que** ces positions variées du cône (11) vis-à-vis du capuchon (14) et son ouverture (25) entraînent une variation continue dans l'ouverture de débit (10), le débit souhaitable à travers le robinet (51) complet correspondant toujours à une valeur souhaitable de débit vis-à-vis du degré d'ouverture - la hauteur de soulèvement et la position en rotation.

10. Dispositif suivant la revendication 1, **caractérisé en ce que**, en ce qui concerne le débit, le robinet (51) complet est, lorsque le cône (11) est déplacé en rotation, pré-ajusté d'une manière progressive à des valeurs Kv optionnelles.
